# EUROPEAN PATENT APPLICATION

(11) **EP 4 790 279 A1**
(43) Date of publication of application: **12.08.2026**
(21) Application number: 26157055.0
(22) Date of filing: 06.02.2026
(51) Int. Cl.: F16J 15/34, F01D 11/00, F01D 25/18, F16B 3/04

(54) **WIRE RETENTION FOR CARBON SEAL AND METHOD OF ASSEMBLY**

(30) Priority: 07.02.2025 US 202519048661
(71) Applicant: RTX Corporation, Farmington, CT 06032 (US)
(72) Inventor: DAVIS, Todd A., Farmington, 06032 (US); CUNNINGHAM, Alan Ben, Farmington, 06032 (US)
(74) Representative: Dehns

(57) **Abstract**

A seal assembly (100) includes a seal (106) formed of a carbon material, and received within an inner bore in a carrier (108). The seal (106) extends for 360 degrees relative to a central axis of a bore (103) in the seal (106). A groove (116) is formed in an outer periphery (112) of the seal (106) and an inner periphery (110) of the carrier (108). A wire (114) is received within the groove (116) to lock the seal (106) within the carrier (108). A gas turbine engine (20) and a method are also disclosed.

## Description

### TECHNICAL FIELD

This application relates to an arrangement for retaining a carbon seal within a seal carrier. In addition, a method of assembling a seal assembly is disclosed.

### BACKGROUND OF THE INVENTION

Seal assemblies are used in any number of systems which utilize working fluids. One type of seal is a carbon seal formed of various carbon materials. There is a static carbon seal attached to a carrier housing. The static carbon seal is typically in contact with a seal face. In one example, the seal face could be a rotating seal rotating with a shaft.

In many applications the carbon seal and carrier are subject to extreme pressures and temperatures. When this happens, so called carbon "blow-out" can occur. This can cause the carbon seal to move axially, which is undesirable.

### SUMMARY OF THE INVENTION

In an aspect of the present invention, a seal assembly includes a seal formed of a carbon material, and received within an inner bore in a carrier. The seal extends for 360 degrees relative to a central axis of a bore in the seal. A groove is formed in an outer periphery of the seal and an inner periphery of the carrier. A wire is received within the groove to lock the seal within the carrier.

In an embodiment of the above, the wire is formed of a metal.

In another embodiment according to any of the previous embodiments, the carrier is formed of a metal.

In another embodiment according to any of the previous embodiments, the carrier is formed of a metal.

In another embodiment according to any of the previous embodiments, a diameter of the wire is less than a combined width of the groove in the outer periphery of the seal and the groove in the inner periphery of the carrier such that there is clearance.

In another embodiment according to any of the previous embodiments, the seal has an enlarged body portion received within the carrier and a radially smaller portion extending forwardly of the carrier to contact a rotating seal face (i.e., the body portion received within the carrier is larger than the portion extending axially away from the carrier).

In another embodiment according to any of the previous embodiments, an opening in an outer periphery of the carrier extends inwardly to connect to the groove.

In another aspect of the present invention, a gas turbine engine includes a shaft for rotation about an axis. The shaft rotates with a rotating seal face. A seal assembly seals against the rotating seal face. The seal assembly has a seal body formed of a carbon material and is received within an inner bore in a carrier. The seal extends for 360 degrees relative to a rotational axis of the shaft. A groove is formed in an outer periphery of the seal and an inner periphery of the carrier and a wire received within the groove to lock the seal within the carrier.

In an embodiment of the above, the wire is formed of a metal.

In another embodiment according to any of the previous embodiments, the carrier is formed of a metal.

In another embodiment according to any of the previous embodiments, a diameter of the wire is less than a combined width of the groove in the outer periphery of the seal and a groove in the inner periphery of the carrier such that there is clearance.

In another embodiment according to any of the previous embodiments, the seal has an enlarged body portion received within the carrier and a radially smaller portion extending forwardly of the carrier to contact the rotating seal face (i.e., the body portion received within the carrier is larger than the portion extending axially away from the carrier).

In another embodiment according to any of the previous embodiments, the rotating seal face is in contact with a bearing portion.

In another embodiment according to any of the previous embodiments, an opening in an outer periphery of the carrier extends inwardly to connect to the groove.

In another aspect of the present invention, a method of assembling a seal includes the steps of inserting a seal body formed of a carbon material into a bore in a carrier assembly. Each of an outer periphery of the seal and an inner periphery of the carrier includes a groove. Moving a wire through an opening in the carrier into the groove in the carrier and the seal body secures the seal to the carrier.

In an embodiment of the above, the wire is formed of a metal.

In another embodiment according to any of the previous embodiments, the carrier is formed of a metal.

In another embodiment according to any of the previous embodiments, a diameter of the wire is less than a combined width of the groove in an outer periphery of the seal and the groove in an inner periphery of the carrier such that there is clearance.

In another embodiment according to any of the previous embodiments, the seal has an enlarged body portion received within the carrier and a radially smaller portion extending forwardly of the carrier to contact a rotating seal face (i.e., the body portion received within the carrier is larger than the portion extending axially away from the carrier).

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A shows a seal assembly that may be incorporated into the gas turbine engine.
Figure 2B shows a detail of the Figure 2A seal assembly.
Figure 3A shows a first assembly step.
Figure 3B is a cross-section through a portion of Figure 2B along line B-B.

### DETAILED DESCRIPTION

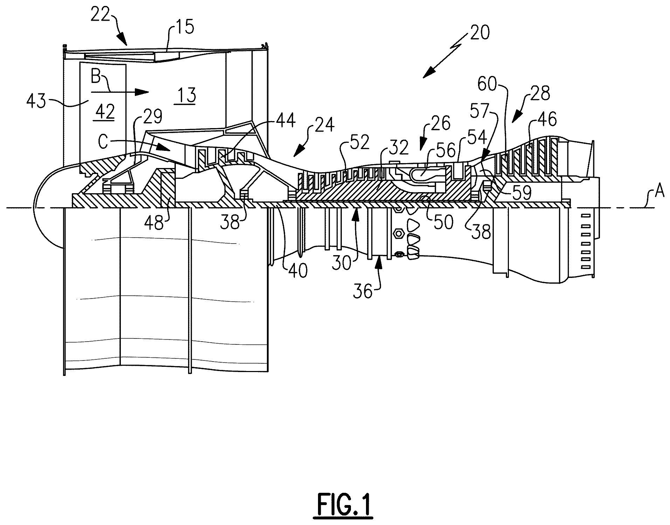

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The **TET** is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

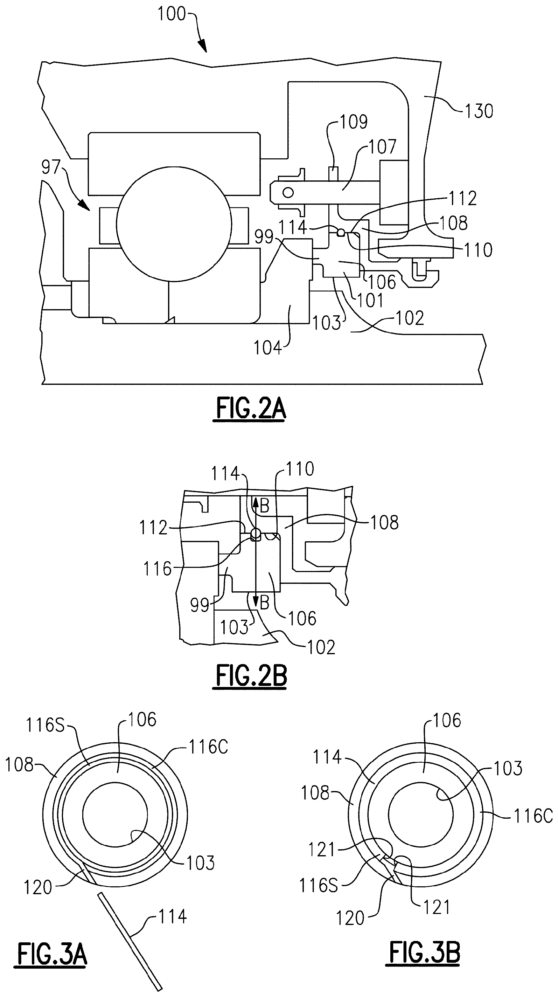

Figure 2A shows a seal assembly 100 which may be incorporated into the gas turbine engine of Figure 1 at any number of locations. On the other hand, seal assemblies on various other mechanical systems will benefit from the teachings of this disclosure. A shaft 102 rotates with a rotating seal face 104. A ball bearing 97 has its rotating half contacted by rotating seal face 104.

Rotating seal face 104 is contacted by a static carbon seal 106. In an example seal 106 may be formed of graphitic carbon or similar materials. Carbon seal 106 is attached to a carrier 108. Carrier 108 includes a flange 109 receiving a pin 107 that is attached to static structure 130. Carrier 108 is formed of an appropriate metal in embodiments. The carrier has an inner peripheral surface 110. Carbon seal 106 has a radially inner bore 103 radially outward of shaft 102.

Figure 2B shows a thrust wire 114 positioned between the inner peripheral surface 110 and an outer peripheral surface 112 of seal 106 and in a groove 116. The seal 106 has an enlarged body portion 101 and a smaller portion 99 actually contacting the rotating seal face 104. Other seal shapes will benefit from this disclosure.

Details of the thrust wire 114 are best illustrated in Figure 2B. As can be appreciated, there is clearance within the groove 116 in the seal 106, and a corresponding groove in the inter surface 110 of the carrier 108. A diameter of the wire is less than a combined width of the groove in the outer periphery 112 of the seal 106 and the inner periphery 110 of the carrier 108 such that there is clearance to allow for thermal expansion.

In embodiments thrust wire 114 is formed of an appropriate metal.

Thrust wires are utilized to secure threaded members such as nuts, but have not been utilized in seals.

Figure 3A shows a first step in assembly. The seal 106 is initially placed within the carrier 108. The thrust wire 114 is moved towards an opening 120 which is tangent to the groove 116 and in an outer periphery of the carrier 108 to extend inwardly to correct to the groove 116. As can be appreciated in the groove includes a groove portion 116C in the carrier 108 and a groove portion 116S in the seal 106. Once in the groove 116C/S, thrust wire 114 locks the seal 106 relative to the carrier 108.

Figure 3B shows the wire 114 received within the groove 116 C/S. As is clear, the thrust wire 114 does not extend around the entire circumference of the seal 106, but rather there are ends 121 that are spaced.

The relative diameter of bore 103 relative to an outer diameter of surface 112 is smaller than will likely be the case in practice.

A seal assembly under this disclosure could be said to include a seal formed of a carbon material, and received within an inner bore in a carrier. The seal extends for 360 degrees relative to a central axis of a bore in the seal. A groove is formed in an outer periphery of the seal and an inner periphery of the carrier. A wire is received within the groove to lock the seal within the carrier.

A gas turbine engine under this disclosure could be said to include a shaft for rotation about an axis. The shaft rotates with a rotating seal face. A seal assembly seals against the rotating seal face. The seal assembly has a seal body formed of a carbon material, and is received within an inner bore in a carrier. The seal extends about 360 degrees relative to a rotational axis of the shaft. A groove is formed in an outer periphery of the seal and an inner periphery of the carrier and a wire is received within the groove to lock the seal within the carrier.

A method of assembling a seal under this disclosure could be said to include the steps of inserting a seal body formed of a carbon material into a bore in a carrier assembly. Each of an outer periphery of the seal and an inner periphery of the carrier includes a groove. Moving a wire through an opening in the carrier into the groove in the carrier and the seal secures the seal to the carrier.

Although embodiments are disclosed, a worker of ordinary skill in this art would recognize that certain modifications would come within the scope of this disclosure. For that reason, the following claims should be studied to determine the true scope and content of this disclosure.

## Claims

1. A seal assembly (100) comprising:
a seal (106) formed of a carbon material, and received within an inner bore in a carrier (108), said seal (106) extending for 360 degrees relative to a central axis of a bore (103) in the seal (106);
a groove (116) formed in an outer periphery (112) of the seal (106) and an inner periphery (110) of the carrier (108); and
a wire (114) received within the groove (116) to lock the seal (106) within the carrier (108).

2. The seal assembly (100) as set forth in claim 1, wherein the wire (114) is formed of a metal.

3. The seal assembly (100) as set forth in claim 2, wherein the carrier (108) is formed of a metal.

4. The seal assembly (100) as set forth in claim 1, wherein the carrier (108) is formed of a metal.

5. The seal assembly (100) as set forth in any preceding claim, wherein a diameter of the wire (114) is less than a combined width of a portion (116S) of the groove (116) in the outer periphery (112) of the seal (106) and a portion (116C) of the groove (116) in the inner periphery (110) of the carrier (108) such that there is clearance.

6. The seal assembly (100) as set forth in any preceding claim, wherein the seal (106) has an enlarged body portion (101) received within the carrier (108) and a radially smaller portion (99) extending forwardly of the carrier (108) to contact a rotating seal face (104).

7. The seal assembly (100) as set forth in any preceding claim, wherein an opening (120) in an outer periphery of the carrier (108) extends inwardly to connect to the groove (116).

8. A gas turbine engine (20) comprising:
a shaft (102) for rotation about an axis, and said shaft (102) rotating with a rotating seal face (104), and the seal assembly (100) of any preceding clam sealing against the rotating seal face (104).

9. The gas turbine engine (20) as set forth in claim 8, wherein the rotating seal face (104) is in contact with a bearing portion.

10. A method of assembling a seal (106) comprising the steps of:
inserting a seal (106) formed of a carbon material into a bore in a carrier assembly, each of an outer periphery (112) of the seal (106) and an inner periphery (110) of the carrier (108) including a groove (116);
moving a wire (114) through an opening (120) in the carrier (108) into the groove (116) in the carrier (108) and the seal (106) to secure the seal (106) to the carrier (108).

11. The method as set forth in claim 10, wherein the wire (114) is formed of a metal.

12. The method as set forth in claim 10 or 11, wherein the carrier (108) is formed of a metal.

13. The method as set forth in claim 10, 11 or 12, wherein a diameter of the wire (114) is less than a combined width of a portion (116S) of the groove (116) in an outer periphery (112) of the seal (106) and a portion (116C) of the groove (116) in an inner periphery (110) of the carrier (108) such that there is clearance.

14. The method as set forth in any of claims 10 to 13, wherein the seal (106) has an enlarged body portion (101) received within the carrier (108) and a radially smaller portion (99) extending forwardly of the carrier (108) to contact a rotating seal face (104).
